# EUROPÄISCHE PATENTSCHRIFT

(11) **EP 0 734 944 B1**
(45) Veröffentlichungstag und Bekanntmachung des Hinweises auf die Patenterteilung: **29.01.2003**
(21) Anmeldenummer: 96104906.1
(22) Anmeldetag: 27.03.1996
(51) Int. Cl.: B62J 1/06, F16F 9/02, F16F 9/32

(54) **Schockdämpfungsvorrichtung**
Shock damper
Amortisseur de choc

(30) Priorität: 28.03.1995 DE 19511425
(43) Veröffentlichungstag der Anmeldung: 02.10.1996
(73) Patentinhaber: Hillreiner, Johann G., 85229 Hirtlbach (DE)
(72) Erfinder: Hillreiner, Johann G., 85229 Hirtlbach (DE)
(74) Vertreter: Schwabe - Sandmair - Marx

(56) Entgegenhaltungen:
- DE-C- 190 369
- DE-C- 906 182
- DE-U- 9 003 484
- DE-U- 9 200 156
- US-A- 2 705 634

## Beschreibung

Die vorliegende Erfindung betrifft eine Vorrichtung zur Schockdämpfung für Fahrräder, insbesondere für den Fahrradsitz und gegebenenfalls für den Fahrradlenker gemäß dem Oberbegriff des Patentanspruches 1.

Derartige, im Stand der Technik bekannte Schockdämpfungsvorrichtungen weisen eine Federung auf. Diese Federung ist zwischen einem Rohr und einem oberen Abschnitt bzw. einer Sattelmuffe, an dem der Fahrradsitz bzw. der Fahrradsattel befestigt wird, angeordnet. Das Rohr wird in eine Sitzmuffe des Fahrradrahmens eingeführt und kann festgeklemmt werden. Die zwischen dem Rohr und dem oberen Abschnitt angeordnete Federeinrichtung ist außen von einer oder zwei Führungseinrichtungen umgeben, die den oberen Abschnitt axial zu dem Rohr führen und eine radiale Verdrehung oder eine Verdrehung der genannten Teile zueinander verhindern.

Bei dieser bekannten Schockdämpfungsvorrichtung, die in der Regel für Fahrradsitze bzw. Fahrradsättel verwendet wird, ist nachteilig, daß die Federeinrichtung und die Führungen von außen leicht zugänglich sind. Zum einen können beispielsweise Kinder ihre Finger in die schwingende Federeinrichtung stecken, was zu ganz erheblichen Verletzungen und sogar zur Abtrennung der Finger führen kann. Zum anderen verschmutzen die Führungen leicht und erhalten durch den Abrieb ein Spiel, das zu Instabilitäten und zu einer Steigerung des Verschleisses führt. Auf diese Weise werden die bekannten Schockdämpfungsvorrichtungen im Hinblick auf ihre Sicherheit und im Hinblick auf ihre Verschleißfestigkeit immer noch sehr zurückhaltend beurteilt.

DE-U-90 03 484 offenbart eine Vorrichtung zur zusätzlichen, individuellen Stoßdämpfung für Radfahrer, mit zwei teleskopartig ineinandergreifenden Zylindern und einer Federeinrichtung zur Stoßdämpfung. Zur axialen Verstellung des Federwegs sind in einer Verankerung der Federeinrichtung im Rahmenrohr Gewindemuttern vorgesehen.

DE-C-190 369 offenbart eine federnde Sattelstütze für Fahrräder aus zwei ineinandergreifenden Rohrhülsen, wobei am unteren Ende einer äußeren Rohrhülse ein Riegelstück mit einstellbarem Widerlager für die im oberen Rohrteil liegende Feder angeordnet ist.

Die gattungsbildende DE-U-92 00 156 offenbart eine gefederte Sattelstütze für Fahrräder mit einem Oberteil und einem Unterteil, das unten einen in das Sattelstützrohr eines Fahrradrahmens einzuführenden Rohransatz aufweist, wobei eine Schraubendruckfeder zwischen dem Oberteil und dem Unterteil angeordnet ist, um bei der teleskopartigen Verschiebung des Ober- und Unterteils eine Dämpfung zu erzielen. Zwar soll eine Verschmutzung der und ein versehentliches Hineingreifen in die Feder ausgeschlossen werden, doch wird die Dämpfung ausschließlich durch die Druckfeder bestimmt, was zu einem nachteiligen Federverhalten führen kann, insbesondere zu einem Aufschwingen auf sehr unebenen Wegen.

Aufgabe der vorliegenden Erfindung ist es, die gattungsbildende Vorrichtung zur Schockdämpfüng für Fahrräder dahingehend weiterzubilden, dass ein noch vorteilhafteres Dämpfungsverhalten erzielt werden kann.

Diese Aufgabe wird durch eine Schockdämpfungsvorrichtung mit den im Patentanspruch 1 aufgeführten Merkmalen gelöst.

Zweckmäßige Ausführungsformen gehen aus den in den Unteransprüchen definierten Merkmalen hervor.

Die mit der vorliegenden Erfindung zu erzielenden Vorteile beruhen darauf, daß der obere Abschnitt und das Rohr in einem Bereich, in dem eine Überlappung auftritt, derart zusammensetzbar sind, daß sich ein im wesentlichen geschlossener Hohlraum bzw. ein geschlossenes Gehäuse ergibt. Mit anderen Worten, der obere Abschnitt der erfindungsgemässen Vorrichtung ist als den oberen Teil des Rohres teilweise umgreifende Büchse ausgebildet, die an dem Rohr geführt wird. Die

Büchse des oberen Abschnitts bildet dabei zusammen mit dem Rohr ein im wesentlichen nach außen hin abgeschlossenes Volumen, so daß die Feder weder von außen zugänglich ist noch Schmutz zwischen die genannten Teile eindringen kann, um zu einem erhöhten Verschleiß zu führen. Durch die Abgeschlossenheit dieses Systems können Personen ihre Gliedmaßen nicht mehr in gefährliche Positionen bringen, die zu Verletzungen führen könnten.

Ferner ist es vorteilhafterweise möglich, die für die Dämpfung erforderliche Federeinrichtung weit in das Rohr hineinzuverlegen oder hineinzuerstrecken, das in die Sitzkopfmuffe eingeführt wird. Hierdurch ist es möglich, wesentlich längere Federeinrichtungen bzw. Federn zu verwenden, als dies bei bekannten Schockdämpfungsvorrichtungen möglich ist.

Wenn die Federeinrichtung vollständig in das Rohr aufgenommen werden soll, ist es vorteilhaft, wenn der obere Abschnitt eine axial zu dem Rohr verlaufende Verlängerung aufweist, die in dem Rohr geführt ist, und der gegenüber der Federeinrichtung abgestützt ist. Auf diese Weise lassen sich die Führung und die gefederte Abstützung des oberen Abschnittes örtlich voneinander separieren, so daß der Führungsbereich sehr dicht abgeschlossen werden kann, ohne daß hiervon die Austauschbarkeit der Federeinrichtung berührt wird, die über das andere Ende des Rohres ausgetauscht werden kann. Sowohl die Sicherheit als auch die Wartungsfreundlichkeit der erfindungsgemäßen Vorrichtung nehmen hierdurch in erheblichem Maße zu.

Um eine Rotation des oberen Abschnittes und damit des Fahrradsitzes bzw. -sattels gegenüber dem Rohr zu vermeiden, kann in dem Bereich, in dem die Überlappung zwischen dem oberen Abschnitt und dem Rohr auftritt, ein gegen eine axiale Verdrehung wirkendes Zwischenteil angeordnet sein. Dabei kann dieses Zwischenteil sowohl zwischen der Büchse des oberen Abschnitts und dem Rohr angeordnet sein, als auch zwischen der Verlängerung des oberen Abschnitts und dem Rohr.

Das Zwischenteil weist vorteilhafterweise wenigstens eine radial einwärts und/oder auswärts ausgebildete Struktur, beispielsweise eine Aussparung oder Nut bzw. einen Grat oder dergleichen auf, wobei das obere Teil und/oder das Rohr bzw. der Stab eine entsprechende Paßform aufweisen, die mit der Struktur in Eingriff bringbar ist, um die zu vermeidende Rotation verhindern zu können.

Die erfindungsgemäße Vorrichtung kann andererseits auch derart ausgebildet sein, daß die nach der eingangs aufgeführten Beschreibung an dem oberen Teil angeordnete Büchse an der dem oberen Teil zugewandten Seite des Rohres angeordnet ist und das obere Teil im wesentlichen lediglich einen Stempel oder dergleichen aufweist, der eine Passung zu der an dem Rohr befestigten Büchse aufweist und auf diese Weise den bereits erwähnten geschlossenen Hohlraum bzw. Gehäuse ergibt. Die erwähnte Struktur zur Verhinderung eines Verdrehens kann dann zwischen dem Stempel des oberen Teils und der Büchse am oberen Ende des Rohres vorgesehen sein.

Vorteilhafterweise kann die Federeinrichtung eine Feder mit einer axial veränderlichen Federkonstante aufweisen, um dem Radfahrer besonders komfortable Dämpfungseigenschaften zu vermitteln. Auch kann die Federeinrichtung aus zwei oder mehr Federn mit gleichen oder wenigstens teilweise unterschiedlichen Federkonstanten aufgebaut sein. Hierdurch kann durch eine Überlagerung der Dämpfüngscharakteristiken der verschiedenen Federn ebenfalls ein besonders vorteilhafter Dämpfungseffekt erzeugt werden, der im Hinblick auf die Gesundheit und den Komfort für den Radfahrer ganz erhebliche Vorteile bietet. Die Federkonstanten und Federungseigenschaften der Federn können so aufeinander abgestimmt werden, daß zwar ein sehr großer Federweg vorhanden ist, dieser bei der Aufnahme eines Schocks jedoch wenigstens teilweise durch das unterschiedliche Ansprechverhalten und Überschwingverhalten der Federn ausgeglichen wird, wodurch der Radfahrer vor Erschütterungen, denen das Rad ausgesetzt ist, noch weitaus besser geschützt ist.

Anstelle der üblichen Federn bzw. einer üblichen Feder oder zusätzlich hierzu, kann auch ein Gasdruckzylinder angeordnet werden, um die Schocks von Schlaglöchern, Bodenunebenheiten, Pflasterstraßen oder dergleichen wenigstens teilweise aufzunehmen. Gasdruckzylinder haben jedoch den Nachteil, daß sie umso leichter ihre Dämpfungseigenschaften verlieren umso öfter und länger sie großen Belastungen ausgesetzt sind. Dabei kann eine Radtour ohne weiteres eine derart große Anzahl von schweren Erschütterungen und Schocks auf einen Gasdruckzylinder ausüben, wie ihn ein Gasdruckzylinder in einem Bürosessel ansonsten in einem ganzen Jahr nicht erfährt. Dies führt natürlich zu einer sehr schnellen Alterung, so daß übliche Gasdruckzylinder sowohl von ihren Abmessungen als auch insbesondere von ihrem Verschleiß her nicht sonderlich für eine Schockdämpfungsvorrichtung gemäß der vorliegenden Erfindung geeignet sind.

Um auch den Hohlraum gesondert ausnutzen zu können, der sich zwischen dem Rohr und dem oberen Abschnitt der erfindungsgemäßen Vorrichtung ergibt, kann in diesem Hohlraum bzw. dem Gehäuse eine Federeinrichtung eingesetzt werden. Wird ein relativ kurzer Federweg als ausreichend angesehen, so kann die komplette Federeinrichtung der gesamten erfindungsgemäßen Vorrichtung auch in diesem Hohlraum angeordnet werden. Das gleiche gilt, falls die Abmessungen des Rahmens und die Bauhöhe des entsprechenden Fahrrades eine axial besonders langerstreckte Büchse zulassen.

Im Hinblick auf die Dämpfungseigenschaften der erfindungsgemäßen Schockdämpfungsvorrichtung ergeben sich ganz erhebliche Vorteile, da der im wesentlichen geschlossene Hohlraum und/oder der Aufnahmeraum für die Federeinrichtung wenigstens eine Öffnung aufweist, durch die Luft entweichen kann und durch die Luft angesogen werden kann. Die Trägheit der Luft oder irgendeines anderen Gases führt zu einer zusätzlichen Dämpfung insbesondere der Schwingungen, die eine Federeinrichtung nach Auftreten eines Schocks erzeugt. Die Größe der Öffnung ist dabei für die Dämpfung durch die Luftsäule innerhalb des Hohlraums bzw. des Aufnahmeraums für die Federeinrichtung mit entscheidend. Die Öffnung kann beispielsweise mit einer Schürze, einer Membran oder dergleichen, abgedeckt sein, die der entweichenden Luft keinen oder kaum Widerstand entgegensetzt, während der in den Hohlraum bzw. Aufnahmeraum eindringenden Luft ein größerer oder ganz erheblicher Widerstand entgegengesetzt wird.

Vorteilhafterweise läßt sich beispielsweise abhängig von einer bestimmten Strekkeneigenschaft, die beispielsweise durch eine vollkommen glatte Straße oder einen holprigen; mit Schlaglöchern übersäten Feldweg vorgegeben werden kann, eine Einstellung der Größe der Ventilationsöffnung(en) der erfindungsgemäßen Vorrichtung vornehmen. So kann beispielsweise mit einer Schraube, die eine axial sich vergrößernde bzw. verkleinernde Kerbung aufweist, der effektive Öffnungsquerschnitt der Ventilationsöffnung reguliert werden, um entweder eine größere oder eine geringere Dämpfung zu erzielen.

Außerdem ist es auch möglich, in die betreffende Öffnung bzw. die betreffenden Öffnungen Ventileinrichtungen einzusetzen, die der aus dem Hohlraum bzw. dem Aufnahmeraum entweichenden Luft nur einen geringen Widerstand entgegensetzen. Führt die sich in ihre Ruhelage zurückbewegende Federeinrichtung zu einem Unterdruck in dem Hohlraum bzw. dem Aufnahmeraum, so kann die betreffende Ventileinrichtung der einströmenden Luft einen erhöhten Strömungswiderstand entgegensetzen und so die Dämpfungseigenschaften der erfindungsgemäßen Vorrichtung weiter verbessern.

Der obere Abschnitt und das Rohr können jeweilige Widerlager für die Federeinrichtung aufweisen. Vorteilhafterweise sind diese Widerlager axial verstellbar angeordnet, so daß die Feder bzw. die Federn der Federeinrichtung über die Widerlager in eine vorgespannte Stellung gebracht werden können und auch ein Austausch der Federn bzw. der Federeinrichtung und/oder des Gasdruckzylinders ermöglicht wird.

Es ist leicht erkennbar, daß eine Kombination der oben aufgeführten Merkmale zu einer ganz besonders vorteilhaften Schockdämpfungsvorrichtung führen muß. So ist eine Schockdämpfungsvorrichtung mit wenigstens einer Feder und mit einer einstellbaren Dämpfung über die Luftsäule innerhalb der erfindungsgemäßen Vorrichtung im Hinblick auf Sicherheit und Dämpfungseigenschaften gegenüber bekannten Vorrichtungen mit herausragenden Vorteilen ausgestattet.

Nachfolgend wird die vorliegende Erfindung unter Bezugnahme auf eine besonders vorteilhafte Ausführungsform anhand der beigefügten Figuren näher erläutert, wobei weitere Vorteile und Merkmale gemäß der vorliegenden Erfindung offenbart werden, in welchen:
- Fig. 1: ein Längsschnitt durch eine vorteilhafte Ausführungsform gemäß der vorliegenden Erfindung ist;
- Fig. 2: ein Längsschnitt durch einen oberen Teil der Ausführungsform gemäß Fig. 1 ist; und
- Fig. 3: eine querschnittliche Darstellung durch den oberen Abschnitt der Ausführungsform gemäß den Fig. 1 und 2 wiedergibt.

In den verschiedenen Figuren mit gleichen Bezugszeichen gekennzeichnete Teile bezeichnen jeweils gleiche oder zumindest funktionsgleiche Teile.

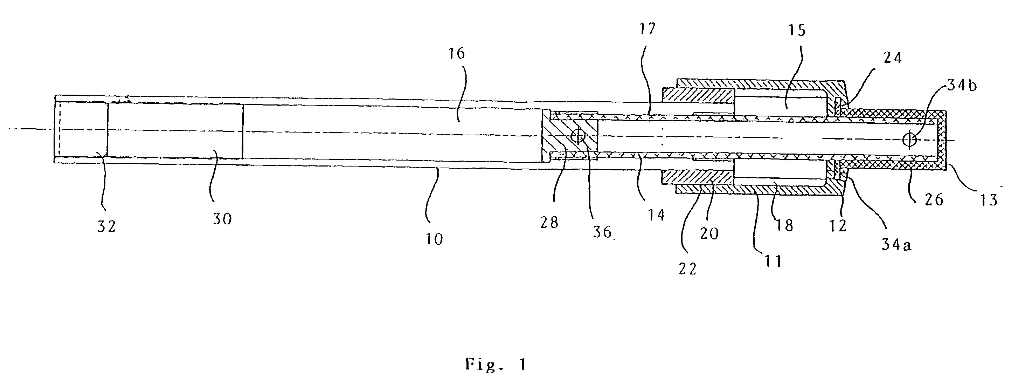

Die in Fig. 1 im Längsschnitt dargestellte Ausführungsform einer erfindungsgemäßen Schockdämpfungsvorrichtung weist ein Rohr 10 auf, das in eine Sitzkopfmuffe eingeführt und durch diese am Fahrradrahmen festgeklemmt werden kann. Ein oberer Abschnitt 12 ist am oberen Teil des Rohres 10 axial beweglich vorgesehen, wobei ein Sattel (nicht dargestellt) am axial äußeren Ende 13 des oberen Abschnitts 12 festgelegt werden kann.

Der obere Abschnitt 12 weist innen ein Führungsrohr 14 auf, das fest mit dem oberen Abschnitt 12 verbunden ist und über ein Widerlager 28 auf eine Federeinrichtung 16 einwirken kann. Das Führungsrohr 14 ist in einem Führungsabschnitt 17 in dem Rohr 10 axial beweglich eingefaßt. Das Rohr 14 kann über Befestigungsmittel auf der einen Seite mit dem oberen Abschnitt 12 und auf der anderen Seite mit dem Widerlager 28, das stempelartig ausgebildet ist, beispielsweise über Bolzen oder Schrauben 36 verbunden sein.

Zwischen dem Rohr 10 und dem oberen Abschnitt 12 ist ein Zwischenteil 20 angeordnet, in dessen Bereich die Büchse 11 des oberen Teils 12 mit dem Rohr 10 bzw. dem Zwischenteil 20 in einem Bereich 22 überlappt. Bei der vorliegenden Ausführungsform bilden die Büchse 11 des oberen Teils 12, das Zwischenteil 20 und das Rohr den im wesentlichen geschlossenen Hohlraum 15 aus. In diesen Hohlraum 15 und damit verbunden in den Mechanismus der erfindungsgemäßen Schockdämpfungsvorrichtung können damit weder Schmutzpartikel noch Körperteile, wie etwa Finger von Kindern, eingeführt werden.

Dabei weist das Zwischenteil 20 eine Struktur auf. Die Gegenstruktur 18 an der Innenwandung der Büchse 11 des oberen Teils 12 ist komplementär ausgebildet, so daß sie axial als Führung und in Rotationsrichtung als Sperre dient.

Es versteht sich für den Fachmann von selbst, daß die Büchse 11 auch fest am oberen Teil des Rohres 10 montiert sein kann, wobei dann der Abschnitt des oberen Teils 12, der mit dieser Büchse zusammenwirkt, stempelartig ausgebildet ist und in der Büchse, die in diesem Fall an dem Rohr 10 fixiert ist, axial beweglich ist, wobei ansonsten prinzipiell bei der dargestellten Ausführungsform keine Änderungen vorgenommen werden müssen, nur daß die rotationshemmenden Strukturen in den Bereichen der Büchse bzw. des Stempels des oberen Abschnitts vorgesehen werden müssen. Der Überlappungsbereich 22 wäre in diesem Fall in dem Bereich des eingezeichneten Teils 24 vorgesehen.

In dem Aufnahmeraum 16 ist die Federeinrichtung vorgesehen, die aus einer oder mehreren Federn bestehen kann. Hier kann auch ein Gasdruckzylinder angeordnet werden. Die Federn können axial differierende Federkonstanten aufweisen. Es können auch verschiedene Federn mit unterschiedlichen Federkonstanten, unterschiedlichen Längen und dergleichen mehr in den Aufnahmeraum 16 eingesetzt werden. Die Federeinrichtung bzw. einzelne Federn oder sämtliche Federn der Federeinrichtung können ausgetauscht oder in ihrer Federkraft eingestellt werden, wenn die Stellschraube 30, die gleichzeitig als Widerlager für das Rohr 10 dient, in axialer Richtung aus dem Rohr 10 herausgeschraubt wird. Alternativ oder ergänzend können auch in den Hohlraum 15 Federn eingesetzt werden.

Durch die Bezugszeichen 34a und 34b sind Ventilationsöffnungen angedeutet, über die in den Hohlraum 15 und gegebenenfalls auch in den Aufnahmeraum 16 Luft einströmen kann bzw. aus denen aus diesen Räumen Luft entweichen kann. Für den Fall, daß auch aus dem Aufnahmeraum 16 kontrolliert Luft entweichen können soll, muß in axialer Richtung auch durch das Widerlager bzw. den Stempel 28 hindurch eine Durchgangsbohrung vorgesehen sein, so daß die Ventilationsöffnung 34b über diese Durchgangsbohrung (nicht dargestellt) strömungstechnisch eine Verbindung zu dem Aufnahmeraum 16 hat. Es ist natürlich auch möglich, unmittelbar in die Wandung des Rohres eine Ventilationsöffnung einzubringen, wobei eine derartige Öffnung jedoch für Schmutzpartikel leichter zugänglich ist, als es die Öffnung 34b unmittelbar unterhalb des Fahrradsitzes bzw. Fahrradsattels (nicht dargestellt) ist.

Vorteilhafterweise sind in der bzw. den Ventilationsöffnungen 34a, 34b Steuereinrichtungen vorgesehen, über die die Luftzufuhr und die Luftabfuhr aus den Hohlräumen 15, 16 gesteuert werden kann bzw. einstellbar ist. Hierfür können Schrauben mit Kerbungen oder auch Ventile oder dergleichen Verwendung finden. Entsprechende Steuereinrichtungen, die der entweichenden Luft einen geringen Widerstand entgegensetzen und der nachströmenden Luft einen erhöhten Widerstand entgegensetzen, sind zur Verbesserung der Dämpfungseigenschaften zu bevorzugen.

Die einzelnen Teile der erfindungsgemäßen Schockdämpfungsvorrichtung sind vorteilhafter Weise aus möglichst leichten, jedoch widerstandsfähigen Materialien hergestellt. Für das Rohr 10 beispielsweise eignet sich als idealer Werkstoff Aluminium. Um den oberen Abschnitt 12 günstig fertigen zu können, kann dieser im Bereich der Büchse 11 aus Kunststoff gefertigt, insbesondere gespritzt sein, wobei der den Sattel tragende Abschnitt 13 über eine Verankerungsscheibe 24 in dem Kunststoffmaterial der Büchse bzw. des Gehäuses 11 festgelegt sein kann. Selbstverständlich können die genannten Teile allesamt auch aus anderen mechanisch ausreichend stabilen Materialien hergestellt sein, insbesondere Stahl oder dergleichen. Aluminium ist im Hinblick auf seine Abriebeigenschaften, die im Bereich der Führungen 18 und der komplementären Strukturen innerhalb des Zwischenteils 20 zu einem Abrieb und damit zu einem Verschleiß führen würden, kein idealer Werkstoff. Verwendete Kunststoffmaterialien könnten beispielsweise über Kohlenstoffasern bzw. Glasfasern oder Quarzsand usw. verstärkt und damit noch widerstandsfähiger gemacht werden.

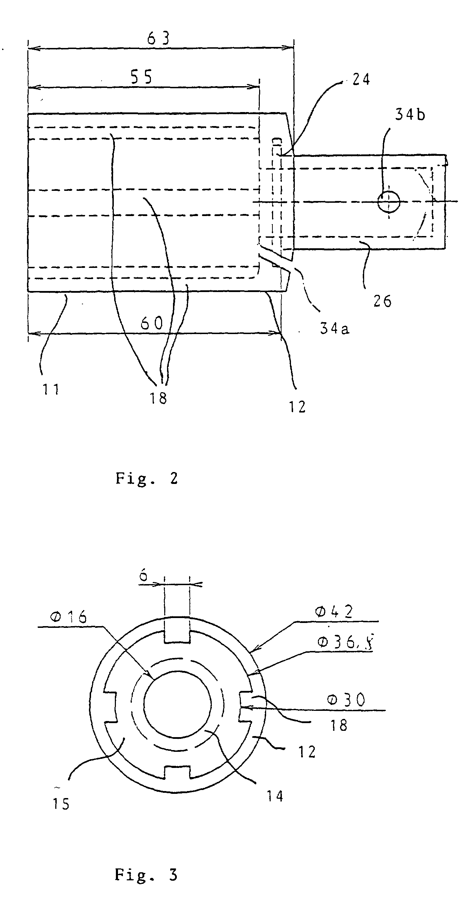

In Fig. 2 ist zu erkennen, daß die Führungs- und Rotationsbegrenzungsstrukturen 18 innen über den Umfang der Büchse 11 des oberen Abschnitts 12 verteilt sind. Eine Anzahl von vier derartigen Strukturen zur Führung und Verhinderung einer Rotation des oberen Abschnitts 12 bzw. des Sattels (nicht dargestellt) hat sich als besonders vorteilhaft erwiesen, da diese entsprechende Anzahl zu einer besonders guten Verteilung der Belastungen führt, und dies bei akzeptablen Fertigungskosten. In Fig. 3 ist die Anordnung der Führungsstrukturen 18, die in entsprechende Nuten bzw. Aussparungen in dem Zwischenteil 20 eingeführt sind, erkennbar.

## Patentansprüche

1. Vorrichtung zur Schockdämpfung für Fahrräder, insbesondere für den Fahrradsitz bzw. -sattel,
a) mit einem Rohr (10),
b) mit einem oberen Abschnitt (12), der an dem Rohr geführt ist,
c) mit einer Federeinrichtung (16), die zwischen dem Rohr (10) und dem oberen Abschnitt (12) ihre Wirkung entfaltet, wobei
d) der obere Abschnitt (12) und das Rohr (10) in einem Bereich (22), in dem eine Überlappung auftritt, derart zusammensetzbar sind, dass sich ein im wesentlichen geschlossener Hohlraum bzw. Gehäuse ergibt, und wobei
e) der Hohlraum (15) wenigstens eine Öffnung (34a) aufweist,
**dadurch gekennzeichnet, dass**
die Federeinrichtung in einem in dem Rohr (10) ausgebildeten Aufnahmeraum vorgesehen ist, der separat zum Hohlraum ausgebildet ist, wobei die Öffnung (34a) so bemessen ist, dass die durch die Öffnung angesogene und entweichende Luft zu einer zusätzlichen Dämpfung der Federeinrichtung führt.

2. Vorrichtung nach Anspruch 1, **dadurch gekennzeichnet, dass** der obere Abschnitt (12) eine Büchse (11), ein Gehäuse oder dergleichen aufweist, das zu dem im wesentlichen geschlossenen Hohlraum (15) beiträgt.

3. Vorrichtung nach einem der Ansprüche 1 oder 2, **dadurch gekennzeichnet, dass** die Federeinrichtung in dem Rohr (10) angeordnet ist und sowohl gegenüber dem Rohr (10) als auch gegenüber dem oberen Abschnitt (12) abgestützt ist.

4. Vorrichtung nach einem der Ansprüche 1 bis 3, **dadurch gekennzeichnet, dass** der obere Abschnitt (12) eine axial zu dem Rohr (10) verlaufende Verlängerung (14) aufweist, die in dem Rohr (10) geführt ist und die gegenüber der Federeinrichtung abgestützt ist.

5. Vorrichtung nach einem der Ansprüche 1 bis 4, **dadurch gekennzeichnet, dass** in dem Bereich (22), in dem die Überlappung auftritt, ein gegen eine axiale Verdrehung wirkendes Zwischenteil (20) angeordnet ist.

6. Vorrichtung nach Anspruch 5, **dadurch gekennzeichnet, dass** das Zwischenteil (20) wenigstens eine radiale einwärts und/oder auswärts ausgerichtete Struktur, beispielsweise eine Aussparung oder Nut bzw. einen Grat oder dergleichen aufweist, wobei der obere Abschnitt (12) und/oder das Rohr (10) eine entsprechende Passform (18) aufweist, die mit der Struktur in Eingriff bringbar ist.

7. Vorrichtung nach einem der Ansprüche 1 bis 6, **dadurch gekennzeichnet, dass** die Federeinrichtung eine, zwei oder mehr Federn mit jeweils sich in axialer Richtung ändernder, gleiche oder wenigstens teilweise unterschiedliche Federkonstanten aufweist.

8. Vorrichtung nach einem der Ansprüche 1 bis 7, **dadurch gekennzeichnet, dass** die Federeinrichtung wenigstens einen Gasdruckzylinder aufweist.

9. Vorrichtung nach einem der Ansprüche 1 bis 8, **dadurch gekennzeichnet, dass** der Hohlraum (15) eine Feder bzw. die Federeinrichtung aufnimmt.

10. Vorrichtung nach einem der Ansprüche 1 bis 9, **dadurch gekennzeichnet, dass** der Aufnahmeraum (16) für die Federeinrichtung wenigstens eine Öffnung (34a, 34b) aufweist.

11. Vorrichtung nach Anspruch 10, **dadurch gekennzeichnet, dass** die Öffnung (34a, 34b) eine Einrichtung zur Einstellung des Öffnungsquerschnitts, beispielsweise eine Schraube mit axial zulaufender Kerbung oder dergleichen, aufweist.

12. Vorrichtung nach Anspruch 10, **dadurch gekennzeichnet, dass** die Öffnung (34a, 34b) eine Ventileinrichtung aufweist, die vorzugsweise in Auslassrichtung in bezug auf den Hohlraum (15) bzw. den Aufnahmeraum (16) einen geringen oder keinen Strömungswiderstand bietet und in Einlassrichtung des Raumes (15, 16) einen höheren oder größeren Strömungswiderstand bietet.

13. Vorrichtung nach einem der Ansprüche 1 bis 12, **dadurch gekennzeichnet, dass** das Widerlager (30, 28) für die Federeinrichtung im Rohr (10) und/oder am oberen Teil (12) axial einstellbar ist.

## Claims

1. A shock-absorption device for bicycles, in particular for the bicycle seat or saddle,
a) having a tube (10),
b) having a top portion (12), which is guided on the tube,
c) having a spring mechanism (16), which displays its action between the tube (10) and the top portion (12), wherein
d) the top portion (12) and the tube (10) can be assembled in a region (22) in which overlapping occurs in such a manner that a substantially closed cavity or housing is produced, and wherein
e) the cavity (15) comprises at least one aperture (34a),
**characterised in that** the spring mechanism is provided in a chamber which is constructed in the tube (10)and is constructed separately from the cavity, the aperture (34a) being dimensioned so that the air taken in and escaping through the aperture results in an additional damping of the spring mechanism.

2. A device according to Claim 1,
**characterised in that** the top portion (12) comprises a sleeve (11), a housing or the like, which contributes to the substantially closed cavity (15).

3. A device according to one of Claims 1 or 2,
**characterised in that** the spring mechanism is disposed in the tube (10) and is supported both with respect to the tube (10) and also with respect to the top portion (12).

4. A device according to one of Claims 1 to 3,
**characterised in that** the top portion (12) comprises a lengthening piece (14) extending axially to the tube (10), which is guided in the tube (10) and which is supported with respect to the spring mechanism.

5. A device according to one of Claims 1 to 4,
**characterised in that** an intermediate part (20) acting against an axial twisting is disposed in the region (22) in which overlapping occurs.

6. A device according to Claim 5,
**characterised in that** the intermediate part (20) comprises at least one radially inwardly and/or radially outwardly aligned structure, for example a recess or a groove or a burr or the like, the top portion (12) and/or the tube (10) having a corresponding fit (18), which can be brought into engagement with the structure.

7. A device according to one of Claims 1 to 6,
**characterised in that** the spring mechanism comprises one, two or more springs each having identical spring constants which vary in the axial direction or spring constants which are at least to some extent different.

8. A device according to one of Claims 1 to 7,
**characterised in that** the spring mechanism comprises at least one gas pressure cylinder.

9. A device according to one of Claims 1 to 8,
**characterised in that** the cavity (15) accommodates a spring or the spring mechanism.

10. A device according to one of Claims 1 to 9,
**characterised in that** the chamber (16) for the spring mechanism comprises at least one aperture (34a, 34b).

11. A device according to Claim 10,
**characterised in that** the aperture (34a, 34b) comprises a device for adjusting the opening cross section, for example a screw with an axially tapering notch or similar.

12. A device according to Claim 10,
**characterised in that** the aperture (34a, 34b) comprises a valve mechanism, which preferably offers a small or no flow resistance in the outlet direction with respect to the cavity (15) and the chamber (16) and offers a higher or larger flow resistance in the inlet direction of the chamber (15, 16).

13. A device according to one of Claims 1 to 12,
**characterised in that** the abutment (30, 28) for the spring mechanism is axially adjustable in the tube (10) and/or on the top part (12).

## Revendications

1. Amortisseur de chocs pour bicyclettes, en particulier pour le siège ou la selle de la bicyclette,
a) avec un tube (10),
b) avec une section supérieure (12), qui est guidée le long du tube,
c) avec un dispositif à ressort (16), qui développe son action entre le tube (10) et la section supérieure (12),
d) la section supérieure (12) et le tube (10) pouvant être assemblés de telle manière dans une zone (22) où intervient un recouvrement qu'il apparaît un creux ou caisson essentiellement fermé et
e) l'espace creux (15) présentant au moins une ouverture (34a),
**caractérisé en ce que**
le dispositif à ressort est prévu dans un logement formé dans le tube (10) qui est formé séparément de l'espace creux, l'ouverture (34a) étant dimensionnée de telle façon que l'air aspiré et s'échappant par l'ouverture conduit à un amortissement supplémentaire du dispositif à ressort.

2. Dispositif suivant la revendication 1, **caractérisé en ce que** la section supérieure (12) présente un manchon (11), un caisson ou similaire, qui contribue à l'espace creux (15) essentiellement fermé.

3. Dispositif suivant l'une des revendications 1 ou 2, **caractérisé en ce que** le dispositif à ressort est disposé dans le tube (10) et s'appuie tant sur le tube (10) que sur la section supérieure (12).

4. Dispositif suivant l'une des revendications 1 à 3, **caractérisé en ce que** la section supérieure (12) présente un prolongement (14) s'étendant axialement par rapport au tube (10), qui est introduit dans le tube (10) et s'appuie sur le dispositif à ressort.

5. Dispositif suivant l'une des revendications 1 à 4, **caractérisé en ce qu'**une pièce intermédiaire (20) agissant contre la torsion axiale est disposée dans la zone (22) où se produit le recouvrement.

6. Dispositif suivant la revendication 5, **caractérisé en ce que** la pièce intermédiaire (20) présente au moins une structure orientée radialement vers l'intérieur et/ou vers l'extérieur, par exemple un évidement ou une rainure ou une nervure ou similaire, la partie supérieure (12) et/ou le tube (10) présentant une forme appropriée correspondante (18), qui peut être mise en prise avec la structure.

7. Dispositif suivant l'une des revendications 1 à 6, **caractérisé en ce que** le dispositif à ressort présente un ou deux ressorts ou plus ayant des constantes de ressort variant respectivement en direction axiale, égales ou au moins partiellement différentes.

8. Dispositif suivant l'une des revendications 1 à 7, **caractérisé en ce que** le dispositif à ressort présente au moins un vérin à pression de gaz.

9. Dispositif suivant l'une des revendications 1 à 8, **caractérisé en ce que** l'espace creux (15) accueille un ressort ou le dispositif à ressort.

10. Dispositif suivant l'une des revendications 1 à 9, **caractérisé en ce que** le logement (16) pour le dispositif à ressort présente au moins une ouverture (34a, 34b).

11. Dispositif suivant la revendication 10, **caractérisé en ce que** l'ouverture (34a, 34b) présente un dispositif de réglage de la section de l'ouverture, par exemple une vis avec rainure axiale ou similaire.

12. Dispositif suivant la revendication 10, **caractérisé en ce que** l'ouverture (34a, 34b) présente un dispositif à valve, qui offre de préférence une faible résistance à l'écoulement, voire aucune, dans le sens de l'échappement hors de l'espace creux (15) ou du logement (16) et une résistance à l'écoulement plus élevée ou plus grande dans le sens de l'entrée dans l'espace (15, 16).

13. Dispositif suivant l'une des revendications 1 à 12, **caractérisé en ce que** la butée (30, 28) pour le dispositif à ressort dans le tube (10) et/ou à la partie supérieure (12) est réglable axialement.
